# EUROPÄISCHE PATENTSCHRIFT

(11) **EP 2 474 405 B1**
(45) Veröffentlichungstag und Bekanntmachung des Hinweises auf die Patenterteilung: **29.06.2016**
(21) Anmeldenummer: 11003092.1
(22) Anmeldetag: 12.04.2011
(51) Int. Cl.: B29C 45/17

(54) **Gasinnendruckverfahren zur Herstellung von Kunststoffteilen**
Gas assist injection method for producing plastic parts
Procédé de pression interne de gaz pour la fabrication de pièces en plastique

(30) Priorität: 11.01.2011 DE 102011008260
(43) Veröffentlichungstag der Anmeldung: 11.07.2012
(73) Patentinhaber: Linde Aktiengesellschaft, 80331 München (DE)
(72) Erfinder: Praller, Andreas, 82110 Germering (DE); Orsén, Mikael, 231 36 Trelleborg (SE); Op de Laak, Marcel, 79106 Freiburg (DE)
(74) Vertreter: Gellner, Bernd

(56) Entgegenhaltungen:
- EP-A1- 0 876 891
- EP-A1- 0 937 561
- EP-A1- 1 046 487
- EP-A1- 1 243 395
- EP-A2- 1 127 674
- EP-A2- 1 645 394
- WO-A1-01/34363
- WO-A1-03/035351
- DE-A1- 10 160 903
- DE-A1- 19 950 261
- DE-A1-102005 026 825
- US-A- 5 354 523
- US-A- 5 798 080
- US-A1- 2004 004 313
- US-A1- 2010 025 880
- US-A1- 2011 104 380
- "WATER-ASSIST MOLDING BEARS FRUIT, HOMES IN ON AUTOMOTIVE APPLICATIONS", MODERN PLASTICS INTERNATIONAL, MCGRAW-HILL,INC. LAUSANNE, CH, 1. März 2004 (2004-03-01), Seite 36/37, XP001182492, ISSN: 0026-8283
- MAPLESTON P: "WATER-ASSIST MOLDING NEARS DEBUT FOR AUTO DUCTS", MODERN PLASTICS INTERNATIONAL, MCGRAW-HILL,INC. LAUSANNE, CH, Bd. 32, Nr. 1, 1. Januar 2002 (2002-01-01) , Seite 34/35, XP001133517, ISSN: 0026-8283
- air liquide: "gas encyclopidiae", products , 1. Januar 2009 (2009-01-01), XP002644344, Gefunden im Internet: URL:http://encyclopedia.airliquide.com/Enc yclopedia.asp?GasID=26 [gefunden am 2009-01-01]
- MICHAELI W ET AL: "GAS ODER WASSER? SPRITZGIESSEN VON HOHLKOERPERN DURCH FLUIDINJEKTION", KUNSTSTOFFE, CARL HANSER VERLAG, MUNCHEN, DE, Bd. 89, Nr. 9, 1. September 1999 (1999-09-01), Seiten 56-58,60,62, XP000958427, ISSN: 0023-5563

## Beschreibung

Die Erfindung betrifft ein Verfahren zur Herstellung eines Formteils, wobei ein schmelzflüssiges Polymer in einen Formhohlraum eines Formwerkzeugs eingebracht und ein Druckfluid dem Formhohlraum zugeführt wird, wodurch das Polymer gegen die Wände des Formhohlraums gedrückt wird.

Zur Herstellung von Formteilen mit hohlen Bereichen oder Kanälen wird häufig das sogenannte Gasinnendruckverfahren eingesetzt. Bei diesem Verfahren wird ein Druckfluid, üblicherweise Stickstoff unter hohem Druck, beispielsweise zwischen 50 bar und 300 bar, in eine nicht vollständig mit Schmelze gefüllte Kavität eines Spritzwerkzeugs injiziert. Der Stickstoff drückt die Schmelze aus dem Zentrum der Kavität an die Wände der Kavität, wodurch der gewünschte Hohlraum entsteht.

Beim sogenannten Nebenkavitätenverfahren wird eine Hauptkavität zunächst vollständig mit der Schmelze gefüllt und anschließend mittels eines Druckfluids, beispielsweise mittels Stickstoff, ein Teil der Schmelze in eine an die Hauptkavität angeschlossene Nebenkavität gedrückt, so dass sich in der Hauptkavität der gewünschte Hohlraum ausbildet.

Außerdem ist noch das Masserückdrückverfahren oder Push-back-Verfahren bekannt, bei dem analog zum Nebenkavitätenverfahren die Kavität zunächst mit Schmelze befüllt wird, welche über eine Förderschnecke zugeführt wird. Ein Teil der Schmelze wird dann durch das Druckfluid nicht in eine Nebenkavität, sondern zurück in die Förderschnecke geschoben.

Die Vorteile der Gasinnendrucktechnik sind unter anderem, dass zur Herstellung des Formteils weniger Material verbraucht wird, dass eine höhere Genauigkeit erzielt werden kann, dass Einfallstellen beseitigt werden können, dass Formteile hergestellt werden können, die eine höhere Festigkeit und Steifigkeit aufweisen, dass die Zykluszeiten verringert werden können, dass durch das Formen bewirkte Beanspruchungen im Material des Formteils stark verringert werden können, und dass Spritzgußmaschinen mit geringerer Schließkraft verwendet werden können.

Aus der EP 1 259 368 B1 ist ein Verfahren zur Gasinnendrucktechnik mit Innenkühlung bekannt. Bei diesem Verfahren wird während das Polymer in der Kavität auskühlt und aushärtet, Stickstoff durch den Hohlraum in dem Kunststoffmaterial geführt, um so das Herunterkühlen und Aushärten zu beschleunigen.

Bei einer Temperatur von 100 °C und einem Druck von 200 bar beträgt die Dichte von Stickstoff 166 kg/cm³, bei niedrigeren Drücken ist die Dichte noch deutlich geringer. Es wurde daher bereits vorgeschlagen, Wasser anstelle von Stickstoff zu verwenden, um das Kunststoffmaterial zu kühlen. Die Dichte von Wasser beträgt bei den genannten Bedingungen von 100 °C und 200 bar 967 kg/m³. Neben der höheren Dichte besitzt Wasser auch eine größere Wärmekapazität als Stickstoff. Entsprechend größer ist die Kühlwirkung, die beim Einsatz von Wasser als Kühlmedium erreicht werden kann, und entsprechend kürzer sind die Zykluszeiten, die mit Wasser erzielt werden können.

Der Einsatz von Wasser hat jedoch zahlreiche Nachteile: Das hergestellte Kunststoffformteil muss nach dem Aushärten sorgfältig getrocknet werden. Außerdem müssen spezielle Kunststoffarten verwendet werden, die Hydrolyse-resistent sind. Auch Leckagen an den wasserführenden Teilen führen häufig zu ernsthaften Qualitätsproblemen.

Aufgabe vorliegender Erfindung ist es daher, ein verbessertes Gasinnendruckverfahren mit Innenkühlung aufzuzeigen. Insbesondere soll eine schnelle Abkühlung der Kunststoffschmelze in der Kavität erreicht werden.

Diese Aufgabe wird durch ein Verfahren zur Herstellung eines Formteils gelöst, wobei ein schmelzflüssiges Polymer in einen Formhohlraum eines Formwerkzeugs eingebracht und ein Druckfluid dem Formhohlraum zugeführt wird, wodurch das Polymer gegen die Wände des Formhohlraums gedrückt wird, und welches dadurch gekennzeichnet ist, dass als Druckfluid flüssiges Kohlendioxid mit einem Druck von mindestens 150 bar, bevorzugt mit einem Druck von mindestens 200 bar oder mindestens 250 bar, eingesetzt wird.

Der Begriff "Formwerkzeug" wird im Rahmen dieser Anmeldung für ein Spritzgusswerkzeug verwendet, welches einen zur Herstellung eines Kunststoff- oder Metallformteils geeigneten Formhohlraum aufweist. Das Werkzeug dient beispielsweise zur Herstellung großer Stückzahlen von Kunststoffteilen. Flüssiger Kunststoff oder ein flüssiges Polymer werden hierzu in das Werkzeug mit hohem Druck eingespritzt, das Formteil kühlt ab und wird nach einer gewissen Zeit aus dem Werkzeug ausgestoßen.

In der Regel besteht das Formwerkzeug aus zwei oder mehr Werkzeugteilen, die voneinander getrennt oder relativ zueinander bewegt werden können, um das Werkzeug zu öffnen und zu schließen.

Die Erfindung bezieht sich auf das sogenannte Gasinnendruckverfahren. Erfindungsgemäß wird das Formwerkzeug geschlossen, wodurch im Inneren des Formwerkzeugs ein Formhohlraum gebildet wird. Das schmelzflüssige Polymer wird in den Formhohlraum des Formwerkzeugs eingebracht bzw. injiziert. Zur Abkühlung der Schmelze wird erfindungsgemäß flüssiges Kohlendioxid unter hohem Druck von mindestens 150 bar genutzt. In der Schmelze soll dabei durch den Druck des zugeführten Kohlendioxids ein Hohlraum erzeugt werden.

Der kritische Punkt von Kohlendioxid liegt bei einer Temperatur von etwa 31,0 °C und einem Druck von 73,8 bar. Das in dem Formhohlraum befindliche Polymer hat eine Temperatur von mehr als 50 °C, meist sogar deutlich mehr als 100 °C, so dass für das Kohlendioxid nach der Zufuhr in den Formhohlraum meist überkritische Bedingungen vorliegen. Erfindungsgemäß wird Kohlendioxid zugeführt, welches vor dem Eintritt in das Formwerkzeug im flüssigen Aggregatszustand vorliegt. Nach der Injektion in den Formhohlraum wird dieses aber in der Regel aufgrund der beschriebenen Temperaturverhältnisse in den überkritischen Zustand übergehen.

Es hat sich gezeigt, dass das Kohlendioxid unter diesen Bedingungen einerseits sehr gute Wärmeübertragungseigenschaften besitzt und sich andererseits auch sehr gut als Druckfluid eignet. Das schmelzflüssige Polymer wird durch das Kohlendioxid schnell und wirkungsvoll gegen die Innenwände des Formwerkzeugs gedrückt, um das gewünschte Formteil zu bilden. Außerdem ist der Wärmeübergang von dem Polymer auf das Kohlendioxid hoch, so dass das herzustellende Formteil rasch abkühlt und die inneren Oberflächen des Formteils eine hohe Oberflächengüte aufweisen. Neben der guten Wärmeleitfähigkeit besitzt das überkritische Kohlendioxid auch eine hohe Wärmekapazität, so dass eine wirkungsvolle Abkühlung des Polymers erzielt wird. Die Erfindung erlaubt daher eine deutliche Reduzierung der zur Herstellung eines Formteils nötigen Zeit. Die Zykluszeit, das heißt die Zeit vom Einbringen des Polymers in den Formhohlraum bis zur Entnahme des fertigen Formteils aus dem Formwerkzeug, wird gegenüber Verfahren, bei denen Stickstoff als Druckfluid und Kühlmedium verwendet wird, deutlich reduziert.

Das erfindungsgemäße Verfahren ist insbesondere dann mit Vorteil einsetzbar, wenn Formteile hergestellt werden sollen, deren innere Oberflächen hohen Qualitätsanforderungen genügen müssen. Die Erfindung wird daher vorzugsweise zur Fertigung von Rohren, insbesondere Rohren oder Leitungen mit geringem Innenquerschnitt, zum Beispiel Kühlleitungen in der Automobilindustrie, eingesetzt.

Es hat sich überraschenderweise gezeigt, dass bei der erfindungsgemäßen Verfahrensweise das Polymer an der Oberfläche nicht aufschäumt und sich eine Oberflächenqualität einstellt, die ansonsten nur bei einer Kühlung mit Wasser erreicht wird. Gegenüber einer Kühlung mit Wasser hat die Erfindung aber den großen Vorteil, dass das Formteil nach der Herstellung nicht getrocknet werden muss und dass sich das erfindungsgemäße Verfahren für alle üblichen beim Spritzgießen eingesetzten Kunststoffe und Polymere eignet. Mit Hilfe einer Wasserkühlung können dagegen nur spezielle Kunststoffe gekühlt werden, da ansonsten die Formteiloberfläche durch das Wasser angegriffen würde.

Das flüssige Kohlendioxid wird bevorzugt mit einem Druck von mindestens 150 bar, mindestens 200 bar oder mindestens 250 bar in den Formhohlraum eingebracht. Mit steigendem Druck erhöhen sich auch die Dichte und Wärmekapazität, so dass eine noch wirkungsvollere Abkühlung erzielt wird. Von Vorteil wird das Kohlendioxid mit einem Druck von maximal 300 bar oder 350 bar in den Formhohlraum eingebracht, da bei höheren Drücken apparative Schwierigkeiten und Dichtheitsprobleme auftreten können.

Bevorzugt wird flüssiges Kohlendioxid als Druckfluid eingesetzt, wobei sich die Eigenschaft "flüssig" auf den Aggregatszustand vor dem Einbringen des Kohlendioxids in den Formhohlraum bezieht. Vor der Zuführung des Kohlendioxids in den mit dem heißen Polymer gefüllten Formhohlraum hat das Kohlendioxid vorzugsweise eine Temperatur zwischen 15 °C und 30 °C, bevorzugt zwischen 15 °C und 25 °C. Erst nach dem Kontakt mit dem Polymer erwärmt sich das Kohlendioxid und geht vom flüssigen in den überkritischen Zustand über.

Die Qualität des hergestellten Formteils hängt sowohl vom Maximaldruck ab, der über das Druckfluid auf die Schmelze ausgeübt wird, als auch vom Druckprofil, d. h. dem Verlauf der Druckänderung bis zum Maximaldruck. Je nach Geometrie des Formhohlraums, je nach Anordnung, Lage und Ausführung der Injektoren für die Schmelze und das Druckfluid und abhängig von dem verwendeten Polymer kann es günstig sein, nicht sofort das Druckfluid, d.h. Kohlendioxid mit einem Druck von mindestens 150 bar, dem Formhohlraum zuzuführen.

Es hat sich gezeigt, dass die Strömungsgeschwindigkeit und der Massenstrom des Druckfluids Einfluss auf die Ausformung des Hohlraums in dem herzustellenden Formteil haben. Bei zu großem Massenstrom oder zu hoher Strömungsgeschwindigkeit können in dem schmelzflüssigen Polymer Verwirbelungen auftreten, die die Ausbildung eines Hohlraums mit hoher Oberflächengüte verhindern.

In einer bevorzugten Ausführungsform wird daher vor der Zufuhr des Druckfluids ein Ausformfluid dem Formhohlraum zugeführt, um einen Hohlraum in dem Polymer zu bilden, wobei als Ausformfluid Kohlendioxid mit einer Dichte von weniger als 500 kg/m³, bevorzugt weniger als 300 kg/m³, eingesetzt wird.

Nach dem Einbringen des schmeizflüssigen Polymers, d.h. der Schmelze, in den Formhohlraum wird zunächst ein Ausformfluid zugeführt, bevor das flüssige Kohlendioxid unter hohem Druck von mindestens 150 bar injiziert wird. Flüssiges Kohlendioxid hat bei Raumtemperatur und einem Druck von 150 bar eine Dichte von etwa 900 kg/m³. Als Ausformfluid wird dagegen Kohlendioxid mit einer Dichte von weniger als 500 kg/m³, bevorzugt weniger als 300 kg/m³, eingesetzt. Bei dem anfänglichen Ausformvorgang wird also ein Ausformfluid eingesetzt, welches eine um die Hälfte oder mehr reduzierte Dichte im Vergleich zu dem Druckfluid, nämlich Kohlendioxid bei 150 bar, aufweist. Entsprechend ist auch der Massenstrom des Ausformfluids deutlich geringer als der des Druckfluids. Durch die Verringerung des Massenstroms werden Verwirbelungen des schmelzflüssigen Polymers in dem Formhohlraum weitgehend vermieden. Wenn das Ausformfluid einen Hohlraum in der Schmelze gebildet hat, kann die erfindungsgemäße Zufuhr des Druckfluids erfolgen.

Von Vorteil wird als Ausformfluid gasförmiges Kohlendioxid mit einem Druck von weniger als 100 bar, vorzugsweise weniger als 80 bar, bevorzugt weniger als 60 bar, zugeführt.

In einer anderen bevorzugten Ausführungsform wird die Dichteabsenkung gegenüber dem Druckfluid über eine Temperaturerhöhung erreicht. In diesem Fall wird als Ausformfluid Kohlendioxid unter einem Druck von mehr als 150 bar und einer Temperatur von mehr als 50°C, bevorzugt zwischen 50°C und 150°C, verwendet.

Bei beiden oben genannten Varianten, der Verwendung von Kohlendioxid bei niedrigem Druck und/oder der Verwendung von Kohlendioxid bei höherer Temperatur, hat das Ausformfluid eine gegenüber Kohlendioxid bei Raumtemperatur und einem Druck von 150 bar wesentlich verringerte Dichte, wodurch der Massenstrom reduziert und die beschriebenen Verwirbelungen weitgehend vermieden werden.

Es hat sich außerdem herausgestellt, dass die Qualität des Formteils über die Größe und den Verlauf des Druckanstiegs beeinflusst werden kann. Von Vorteil wird daher der Druck des Ausformfluids während der Zufuhr des Ausformfluids so erhöht, dass die Druckänderung weniger als 50 bar/s, bevorzugt weniger als 30 bar/s, beträgt. Beispielsweise wird durch Zufuhr des Ausformfluids der Druck im Formhohlraum bzw. in der Schmelze innerhalb von 2 bis 3 Sekunden gleichmäßig auf 60 bar, 70 bar oder 80 bar erhöht.

Die Erfindung eignet sich insbesondere für die Herstellung eines Formteils nach dem Nebenkavitätenverfahren oder nach dem Push-back-Verfahren. Beim Nebenkavitätenverfahren ist an den Formhohlraum, in dem das Formwerkzeug geformt und hergestellt werden soll, eine Nebenkavität angeschlossen. Die Schmelze wird in den Formhohlraum eingeleitet und anschließend teilweise mittels des Ausformfluids und/oder mittels des Druckfluids in die Nebenkavität verdrängt. Die im Formhohlraum verbliebene Schmelze wird an die Wandung des Formhohlraums gedrückt und abgekühlt.

Das Push-back-Verfahren oder auch Masserückdrückverfahren unterscheidet sich von dem Nebenkavitätenverfahren darin, dass ein Teil der Schmelze nicht in eine Nebenkavität, sondern zurück in die Zuleitung oder Förderschnecke verdrängt wird, über die die Schmelze zuvor in den Formhohlraum geleitet wurde.

Beim Push-back-Verfahren muss die Schmelze gegen einen deutlich höheren Druck als beim Nebenkavitätenverfahren aus dem Formhohlraum verdrängt werden. Insbesondere beim Push-back-Verfahren hat sich die oben beschriebene Verfahrensweise mit einem Ausformfluid und einem Druckfluid als besonders vorteilhaft erwiesen.

In einer bevorzugten Ausführungsform werden das als Druckfluid eingesetzte Kohlendioxid und/oder das Ausformfluid vor dem Injizieren in den Formhohlraum abgekühlt, insbesondere auf eine Temperatur von weniger als 15°C, bevorzugt weniger als 10 °C. besonders bevorzugt weniger als 5°C, gebracht. Durch die Temperaturabsenkung wird das flüssige Kohlendioxid unterkühlt und verbleibt nach dem Einbringen in den Formhohlraum länger im flüssigen Aggregatszustand, bevor es unter der Einwirkung des heißen Polymers in den überkritischen Zustand übergeht. Auf diese Weise kann über eine längere Zeitspanne die hohe Wärmekapazität des flüssigen Kohlendioxids ausgenutzt werden und das Polymer kühlt schneller ab.

Das Druckfluid und/oder das Ausformfluid werden vorzugsweise über einen Injektor in den Formhohlraum eingebracht. Aufgrund der beschriebenen guten Wärmeübertragungseigenschaften von Kohlendioxid wird der injektor durch das durchströmende Kohlendioxid gekühlt. Wenn der Injektor zu heiß ist, insbesondere wenn der Injektor eine Temperatur oberhalb der Glas-Temperatur T_{g} des Polymers oder Kunststoffs aufweist, besteht die Gefahr, dass Polymer bzw. Kunststoff anhaften oder ankleben,. Durch die Kühlung des Injektors mit Kohlendioxid wird ein solches Anhaften verhindert und sichergestellt, dass das Formteil nach dem Abkühlen problemlos der Form entnommen werden kann.

Ein weiterer Vorteil besteht darin, dass bei der Verwendung von Kohlendioxid der Injektor in stärkerem Maße durch das durch den Injektor strömende Kohlendioxid selbst gereinigt wird, da beim Durchströmen der sehr dünnen Querschnitte im Injektor - bei einem Ringspaltinjektor werden beispielsweise Ringspalte mit einer Breite von nur 1/100 bis 3/100 mm eingesetzt - aufgrund der Molekülgröße des Kohlendioxid höhere Scherkräfte auftreten als bei Stickstoff.

Die Erfindung eignet sich insbesondere zur Herstellung von Formteilen, bei denen die Qualität der inneren Oberflächen wichtig ist und hoch sein sollte, beispielsweise für Kühlleitungen, insbesondere Kühlleitungen für Kraftfahrzeuge. Außerdem zeigt die Erfindung bei der Herstellung von Formteilen mit großen Wandstärken Vorteile, da die Kühlzeiten durch den Einsatz von Kohlendioxid unter hohem Druck wesentlich reduziert werden können. Allgemein ist das erfindungsgemäße Verfahren bei der Herstellung von Formteilen, die die Verwendung hoher Gasdrücke oberhalb von 150 bar, besonders bevorzugt oberhalb von 200 bar oder 250 bar, erlauben.

Die Erfindung stellt eine Variante der bisherigen Gasinnendrucktechnik dar, bei der anstelle eines oder zusätzlich zu einem gasförmigen Druckfluid flüssiges Kohlendioxid eingesetzt wird. Bei den herkömmlichen Gasinnendruckverfahren wird das als Druckfluid eingesetzte Gas über Gasinjektoren in den Formhohlraum eingebracht. Diese Gasinjektoren sind meist als Ringspaltinjektoren aufgebaut. Eine Nadel ist hierbei in einer Führung beweglich angeordnet, so dass sich zwischen der Nadel und der Führung ein schmaler Ringspalt mit beispielsweise 0,01 mm Spaltbreite bildet.

Es hat sich gezeigt, dass herkömmliche Gasinjektoren der oben genannten Art bei der erfindungsgemäßen Zuführung flüssigen Kohlendioxids nicht das Optimum darstellen, da flüssiges Kohlendioxid andere Strömungsverhältnisse aufweist als gasförmiger Stickstoff. Es besteht daher die Gefahr, dass bei zu kleiner Dimensionierung der Austrittsöffnung der Mengenstrom an Kohlendioxid in den Formhohlraum zu gering ist und dadurch das Formteil langsamer und schlechter ausgeformt wird. Andererseits können zu hohe Strömungsgeschwindigkeiten des Kohlendioxids unerwünschte Vervvirbelungen des Polymers in dem Formhohlraum hervorrufen.

Von Vorteil werden daher Injektoren eingesetzt, deren Austrittsöffnung für das Kohlendioxid eine Querschnittsfläche von mehr als 0,1 mm², mehr als 0,5 mm², mehr als 2 mm² oder mehr als 5 mm² aufweist. Es kann sich dabei um entsprechend modifizierte Ringspaltinjektoren oder um andere Injektoren handeln. Diese Injektoren können sowohl zum Eindüsen des Druckfluids, d.h. des flüssigen Kohlendioxids unter hohem Druck, als auch zum Eindüsen des Ausformfluids verwendet werden. Die Injektoren erlauben einen hohen Mengenstrom bei nicht zu hohen Strömungsgeschwindigkeiten. Bei Einsatz derartiger Injektoren kann der Druck in dem Formhohlraum definiert auf zum Beispiel 200 bar oder 250 bar aufgebaut werden. Das Polymer wird schnell und effektiv an die Wände des Formwerkzeugs gedrückt, wobei Verwirbelungen des Polymers vermeiden werden, so dass sowohl die Formgebung als auch die Kühlung des Formteils verbessert werden.

Beim Einsatz von Ringspaltinjektoren hat es sich als vorteilhaft erwiesen, für den Innendurchmesser des Ringspalts mindestens 5 mm, mindestens 10 mm oder mindestens 15 mm vorzusehen. Bei der oben beschriebenen Ausführung des Ringspaltinjektors mit einer Nadel bedeutet dies, dass die Nadel einen Außendurchmesser von mindestens 5 mm, mindestens 10 mm oder mindestens 15 mm besitzt.

Es ist auch günstig, Injektoren zu verwenden, deren Austrittsöffnung aktiv geöffnet, verschlossen oder in ihrer Größe geändert werden kann. Beispielsweise kann eine hydraulische Verstelleinrichtung vorgesehen sein, mit der die Querschnittsfläche der Austrittsöffnung verändert werden kann.

Durch die genannten Dimensionierungen des Injektors wird insbesondere die Zufuhr des flüssigen Kohlendioxids in den Formhohlraum optimiert, so dass die Zykluszeit bzw. die zur Herstellung eines Formteils erforderliche Zeit gesenkt und/oder die Qualität des Formteils gesteigert werden kann.

Beim Druckabbau, nachdem das Formteil in dem Formwerkzeug ausgeformt und abgekühlt wurde, ist darauf zu achten, dass die innere Oberfläche des ausgeformten Formteils nicht durch zu schnelle Druckabsenkung geschädigt wird.

Vorzugsweise wird deshalb der Druck im Formhohlraum mit einer Geschwindigkeit von weniger als 20 bar/Sekunde, insbesondere mit einer Geschwindigkeit zwischen 10 bar/Sekunde und 20 bar/Sekunde, verringert. Auf diese Weise wird ein Aufschäumen der inneren Oberfläche des Formteils verhindert und so eine hohe Qualität der Innenoberfläche sichergestellt. Der beanspruchte Bereich für die Druckabbaugeschwindigkeit zwischen 10 bar/s und 20 bar/s stellt einen guten Kompromiss zwischen einer möglichst schnellen Druckabsenkung zur Verkürzung der Zykluszeit und einer möglichst langsamen Druckabsenkung zur Verbesserung der Güte der inneren Oberfläche dar.

Von Vorteil erfolgt der Druckabbau linear, das heißt pro Zeiteinheit wird der Druck um denselben Betrag abgesenkt.

Häufig ist es günstig, nach dem Erreichen des Maximaldrucks in dem Formhohlraum den Druck für eine gewisse Zeit zu halten, bevor mit dem Druckabbau begonnen wird. Beispielsweise wird durch Injektion flüssigen Kohlendioxids in dem Formhohlraum ein Druck von 250 bar aufgebaut, dieser Druck für einige Sekunden, zum Beispiel zwischen 5 und 20 Sekunden, gehalten und dann der Druck gleichmäßig mit einer Geschwindigkeit von 15 bar/s wieder reduziert.

Es ist aber auch möglich, unmittelbar nach Erreichen des Maximaldrucks im Formhohlraum mit dem Druckabbau zu beginnen, um so die Zykluszeit zu minimieren.

### Vergleichsversuch:

Eine Kühlmittelleitung aus Kunststoff wurde zunächst nach dem herkömmlichen Gasinnendruckverfahren und zwar insbesondere nach dem Push-back-Verfahren mit gasförmigem Stickstoff als Druckfluid hergestellt. Die Schmelze wurde dabei mit einer Temperatur von 310 °C in das Formwerkzeug injiziert. Die Auswertung der Versuche ergab eine Kühlzeit von 110 Sekunden pro Formteil und eine Gesamtzeit für einen Zyklus, d.h. die Zeit vom Einspritzen der Schmelze in das Formwerkzeug bis zum Einspritzen der Schmelze für das folgende Formteil, von 123 Sekunden.

### Beispiel 1:

Es wurde das gleiche Bauteil wie im Vergleichsversuch hergestellt. Anstelle von gasförmigem Stickstoff wurde erfindungsgemäß flüssiges Kohlendioxid als Druckfluid verwendet. Der Druck des zugeführten flüssigen Kohlendioxids wurde schnell bis auf 250 bar erhöht und dann auf diesem Wert gehalten. Die übrigen Versuchsbedingungen wurden beibehalten. Durch die Verwendung von flüssigem Kohlendioxid als Druckfluid konnte die Kühlzeit von 110 Sekunden auf 60 Sekunden reduziert werden.

### Beispiel 2:

Im nächsten Versuch wurde der Einfluss des Druckprofils untersucht. Im Gegensatz zu Beispiel 1 wurde der Druck nicht schnell bis auf den Maximaldruck erhöht, sondern langsamer und definiert aufgebaut. Zunächst wurde gasförmiges Kohlendioxid als Ausformfluid in den Formhohlraum eingeleitet, um zumindest einen Teil der Schmelze in die Förderschnecke zurückzudrücken. Der Druck des gasförmigen Kohlendioxids wurde innerhalb von 2 Sekunden auf 60 bar erhöht und anschließend 14 Sekunden bei 60 bar gehalten. Nach dieser Haltephase wurde flüssiges Kohlendioxid bei Raumtemperatur zugeführt und der Druck innerhalb von 5 Sekunden auf 250 bar erhöht. Nach einer Haltephase von 5 Sekunden bei 250 bar wurde der Druck langsam wieder bis auf Null abgebaut. Die Zeit für den Druckabbau betrug 10 Sekunden. Die Kühlzeit konnte gegenüber Beispiel 1 auf 36 Sekunden reduziert werden. Die Innenoberfläche der hergestellten Kühlmittelleitungen war von hoher Qualität.

### Beispiel 3:

In diesem Versuch wurde wieder dasselbe Formwerkzeug verwendet, aber ein anderes Kunststoffmaterial eingesetzt. Als Ausformfluid wurde gasförmiges Kohlendioxid verwendet. Der Druck des gasförmigen Kohlendioxids wurde innerhalb von 2 Sekunden auf 80 bar erhöht und anschließend 13 Sekunden bei 80 bar gehalten. Nach dieser Haltephase wurde flüssiges Kohlendioxid bei Raumtemperatur zugeführt und der Druck innerhalb von 5 Sekunden auf 250 bar erhöht. Nach einer Haltephase von 8 Sekunden wurde der Druck langsam wieder bis auf Null abgebaut. Die Zeit für den Druckabbau betrug 5 Sekunden. Die Kühlzeit konnte mit diesem Kunststoff nochmal reduziert werden auf einen Wert von 33 Sekunden. Die Innenoberfläche der hergestellten Kühlmittelleitungen war wiederum von guter Qualität.

Die obigen Beispiele zeigen, dass mit der erfindungsgemäßen Verwendung von flüssigem Kohlendioxid als Druckfluid eine deutliche Verkürzung der Kühl- und Zykluszeit erreichbar ist. Außerdem bringt ein langsamer Druckanstieg unter Verwendung eines Ausformfluids weitere Vorteile sowohl hinsichtlich der Zykluszeit als auch hinsichtlich der Qualität der erzeugten Formteile.

Insbesondere hat es sich als günstig erwiesen, folgende Verfahrensschritte vorzusehen:
a) Zuführen eines Ausformfluids, bis sich ein erster Druck einstellt,
b) Halten des ersten Drucks für eine bestimmte Zeit,
c) Zuführen von flüssigem Kohlendioxid als Druckfluid, bis sich ein zweiter Druck einstellt,
d) Halten des zweiten Drucks für eine bestimmte Zeit,
e) Abbauen des Drucks

Bei den einzelnen Verfahrensschritten haben sich folgende Parameter als günstig erwiesen:
zu a) Der erste Druck beträgt bevorzugt maximal 100 bar, besonders bevorzugt maximal 80 bar, ganz besonders bevorzugt maximal 60 bar. Der Druckaufbau erfolgt mit einer Geschwindigkeit von weniger als 50 bar pro Sekunde, bevorzugt weniger als 30 bar pro Sekunde.
zu b) Der erste Druck wird vorzugsweise 5 bis 30 Sekunden, bevorzugt 10 bis 20 Sekunden lang beibehalten. Es ist auch möglich, auf die Haltephase zu verzichten.
zu c) Der zweite Druck beträgt mindestens 150 bar, besonders bevorzugt mindestens 200 bar, ganz besonders bevorzugt mindestens 250 bar. Der Druckaufbau erfolgt mit einer Geschwindigkeit von mehr als 20 bar pro Sekunde, bevorzugt mehr als 30 bar pro Sekunde, bevorzugt mehr als 50 bar pro Sekunde.
zu d) Der zweite Druck wird vorzugsweise 5 bis 30 Sekunden lang, bevorzugt 10 bis 20 Sekunden lang, beibehalten. Auf diese Haltephase kann aber gegebenenfaiis auch verzichtet werden.
zu e) Der Druckabbau erfolgt vorzugsweise mit einer Geschwindigkeit zwischen 10 bar/s und 20 bar/s.

## Patentansprüche

1. Gasinnendruckverfahren zur Herstellung eines Formteils, wobei ein schmelzflüssiges Polymer in einen Formhohlraum eines Formwerkzeugs eingebracht und ein Druckfluid dem Formhohlraum zugeführt wird, wodurch das Polymer gegen die Wände des Formhohlraums gedrückt wird und in dem schmelzflüssigen Polymer ein Hohlraum erzeugt wird, **dadurch gekennzeichnet, dass** als Druckfluid flüssiges Kohlendioxid mit einem Druck von mindestens 150 bar, bevorzugt mit einem Druck von mindestens 200 bar oder mindestens 250 bar, eingesetzt wird.

2. Verfahren nach Anspruch 1, **dadurch gekennzeichnet, dass** vor dem Einbringen des Polymers in den Formhohlraum Kohlendioxid in den Formhohlraum oder auf einen Teil der Oberflächen des Formwerkzeugs gedüst wird.

3. Verfahren nach einem der Ansprüche 1 oder 2, **dadurch gekennzeichnet, dass** vor der Zufuhr des Druckfluids ein Ausformfluid dem Formhohlraum zugeführt wird, um einen Hohlraum in dem Polymer zu bilden, wobei als Ausformfluid Kohlendioxid mit einer Dichte von weniger als 500 kg/m³, bevorzugt weniger als 300 kg/m³, eingesetzt wird.

4. Verfahren nach Anspruch 3, **dadurch gekennzeichnet, dass** als Ausformfluid Kohlendioxid unter einem Druck von mehr als 150 bar und einer Temperatur von mehr als 50°C, bevorzugt zwischen 50°C, und 150°C, zugeführt wird.

5. Verfahren nach Anspruch 3, **dadurch gekennzeichnet, dass** als Ausformfluid gasförmiges Kohlendioxid mit einem Druck von weniger als 100 bar, vorzugsweise weniger als 80 bar, bevorzugt weniger als 60 bar, zugeführt wird.

6. Verfahren nach einem der Ansprüche 3 bis 5, **dadurch gekennzeichnet, dass** der Druck des Ausformfluids während der Zufuhr des Ausformfluids erhöht wird, wobei die Druckänderung weniger als 50 bar/s, bevorzugt weniger als 30 bar/s, beträgt.

7. Verfahren nach einem der Ansprüche 1 bis 6, **dadurch gekennzeichnet, dass** das Druckfluid und/oder das Ausformfluid über einen Injektor dem Formhohlraum zugeführt werden, wobei die Austrittsöffnung des Injektors eine Querschnittsfläche von mehr als 0,1 mm², mehr als 0,5 mm², mehr als 2 mm² oder mehr als 5 mm² aufweist.

8. Verfahren nach einem der Ansprüche 1 bis 7, **dadurch gekennzeichnet, dass** das Druckfluid und/oder das Ausformfluid über einen Ringspaltinjektor dem Formhohlraum zugeführt werden.

9. Verfahren nach Anspruch 8, **dadurch gekennzeichnet, dass** der Ringspaltinjektor einen Ringspalt mit einem Innendurchmesser von mindestens 5 mm, mindestens 10 mm oder mindestens 15 mm aufweist.

10. Verfahren nach einem der Ansprüche 1 bis 9, **dadurch gekennzeichnet, dass** das Druckfluid und/oder das Ausformfluid vor der Zufuhr in den Formhohlraums abgekühlt werden, insbesondere auf eine Temperatur von waniger als 15°C, bevorzugt weniger als 10°C, besonders bevorzugt weniger als 5°C, gebracht werden.

11. Verfahren nach einem der Ansprüche 1 bis 10, **dadurch gekennzeichnet, dass** nach der Zufuhr des Druckfluids der Druck in dem Formhohlraum mit einer Geschwindigkeit zwischen 10 bar/s und 20 bar/s abgebaut wird.

12. Verfahren nach einem der Ansprüche 1 bis 11, **dadurch gekennzeichnet, dass** der Druck in dem Formhohlraum durch Zufuhr des Druckfluids bis zu einem Maximaldruck erhöht wird und zwischen 5 und 20 Sekunden auf dem Maximaldruck gehalten wird.

13. Verfahren nach einem der Ansprüche 1 bis 12, **dadurch gekennzeichnet, dass** das Formteil nach dem Nebenkavitätenverfahren oder dem Push-bach-Verfahren hergestellt wird.

## Claims

1. Gas assist injection method for producing a moulding, wherein a molten polymer is introduced into a mould cavity of a mould and a pressurizing fluid is fed to the mould cavity, as a result of which the polymer is pressed against the walls of the mould cavity and a cavity is generated in the molten polymer, **characterized in that** liquid carbon dioxide having a pressure of at least 150 bar, preferably having a pressure of at least 200 bar, or at least 250 bar, is used as pressurizing fluid.

2. Method according to Claim 1, **characterized in that**, before the polymer is introduced into the mould cavity, carbon dioxide is injected into the mould cavity or onto a part of the surfaces of the mould.

3. Method according to either of Claims 1 or 2, **characterized in that**, before the pressurizing fluid is fed, a shaping fluid is fed to the mould cavity, in order to form a cavity in the polymer, wherein, as shaping fluid, carbon dioxide having a density of less than 500 kg/m³, preferably less than 300 kg/m³, is used.

4. Method according to Claim 3, **characterized in that**, as shaping fluid, carbon dioxide at a pressure of greater than 150 bar, and a temperature of above 50°C, preferably between 50°C and 150°C, is fed.

5. Method according to Claim 3, **characterized in that**, as shaping fluid, gaseous carbon dioxide having a pressure of less than 100 bar, preferably less than 80 bar, more preferably less than 60 bar, is fed.

6. Method according to any one of Claims 3 to 5, **characterized in that** the pressure of the shaping fluid is increased during the feed of the shaping fluid, wherein the pressure change is less than 50 bar/s, preferably less than 30 bar/s.

7. Method according to any one of Claims 1 to 6, **characterized in that** the pressurizing fluid and/or the shaping fluid are fed to the mould cavity via an injector, wherein the outlet opening of the injector has a cross sectional area of greater than 0.1 mm², greater than 0.5 mm², greater than 2 mm² or greater than 5 mm².

8. Method according to any one of Claims 1 to 7, **characterized in that** the pressurizing fluid and/or the shaping fluid are fed via a ring-gap injector to the mould cavity.

9. Method according to Claim 8, **characterized in that** the ring-gap injector has a ring gap having an internal diameter of at least 5 mm, at least 10 mm, or at least 15 mm.

10. Method according to any one of Claims 1 to 9, **characterized in that** the pressurizing fluid and/or the shaping fluid, before they are fed into the mould cavity, are cooled, in particular are brought to a temperature of below 15°C, preferably below 10°C, particularly preferably below 5°C.

11. Method according to any one of Claims 1 to 10, **characterized in that**, after the feed of the pressurizing fluid, the pressure in the mould cavity is decreased at a rate between 10 bar/s and 20 bar/s.

12. Method according to any one of Claims 1 to 11, **characterized in that** the pressure in the mould cavity is increased to a maximum pressure by feed of the pressurizing fluid, and is maintained at the maximum pressure for between 5 and 20 seconds.

13. Method according to any one of Claims 1 to 12, **characterized in that** the moulding is produced by the overflow cavity method or the push-back method.

## Revendications

1. Procédé à pression interne de gaz pour la fabrication d'une pièce moulée, selon lequel un polymère liquide fondu est placé dans une cavité de moulage d'un outil de moulage et un fluide de pression est introduit dans la cavité de moulage, le polymère étant ainsi poussé contre les parois de la cavité de moulage et une cavité étant formée dans le polymère liquide fondu, **caractérisé en ce que** du dioxyde de carbone liquide ayant une pression d'au moins 150 bar, de préférence ayant une pression d'au moins 200 bar ou d'au moins 250 bar, est utilisé en tant que fluide de pression.

2. Procédé selon la revendication 1, **caractérisé en ce que** du dioxyde de carbone est injecté dans la cavité de moulage ou sur une partie des surfaces de l'outil de moulage avant l'introduction du polymère dans la cavité de moulage.

3. Procédé selon l'une quelconque des revendications 1 ou 2, **caractérisé en ce qu'**un fluide de moulage est introduit dans la cavité de moulage avant l'introduction du fluide de pression, afin de former une cavité dans le polymère, du dioxyde de carbone ayant une densité de moins de 500 kg/m³, de préférence de moins de 300 kg/m³, étant utilisé en tant que fluide de moulage.

4. Procédé selon la revendication 3, **caractérisé en ce que** du dioxyde de carbone sous une pression de plus de 150 bar et à une température de plus de 50 °C, de préférence comprise entre 50 °C et 150 °C, est introduit en tant que fluide de moulage.

5. Procédé selon la revendication 3, **caractérisé en ce que** du dioxyde de carbone gazeux ayant une pression de moins de 100 bar, de préférence de moins 80 bar, de préférence de moins de 60 bar, est introduit en tant que fluide de moulage.

6. Procédé selon l'une quelconque des revendications 3 à 5, **caractérisé en ce que** la pression du fluide de moulage est augmentée pendant l'introduction du fluide de moulage, la modification de pression étant de moins de 50 bar/s, de préférence de moins de 30 bar/s.

7. Procédé selon l'une quelconque des revendications 1 à 6, **caractérisé en ce que** le fluide de pression et/ou le fluide de moulage sont introduits dans la cavité de moulage par un injecteur, l'ouverture de sortie de l'injecteur présentant une surface de section transversale de plus de 0,1 mm², de plus de 0,5 mm², de plus de 2 mm² ou de plus de 5 mm².

8. Procédé selon l'une quelconque des revendications 1 à 7, **caractérisé en ce que** le fluide sous pression et/ou le fluide de moulage sont introduits dans la cavité de moulage par un injecteur à espace annulaire.

9. Procédé selon la revendication 8, **caractérisé en ce que** l'injecteur à espace annulaire présente un espace annulaire ayant un diamètre intérieur d'au moins 5 mm, d'au moins 10 mm ou d'au moins 15 mm.

10. Procédé selon l'une quelconque des revendications 1 à 9, **caractérisé en ce que** le fluide sous pression et/ou le fluide de moulage sont refroidis avant l'introduction dans la cavité de moulage, notamment à une température de moins de 15 °C, de préférence de moins de 10 °C, de manière particulièrement préférée de moins de 5 °C.

11. Procédé selon l'une quelconque des revendications 1 à 10, **caractérisé en ce qu'**après l'introduction du fluide de pression, la pression dans la cavité de moulage est abaissée à une vitesse comprise entre 10 bar/s et 20 bar/s.

12. Procédé selon l'une quelconque des revendications 1 à 11, **caractérisé en ce que** la pression dans la cavité de moulage est augmentée par introduction du fluide de pression jusqu'à une pression maximale et maintenue à la pression maximale pendant une durée comprise entre 5 et 20 secondes.

13. Procédé selon l'une quelconque des revendications 1 à 12, **caractérisé en ce que** la pièce moulée est fabriquée par le procédé à cavité secondaire ou le procédé « Push-back ».
